# EUROPÄISCHE PATENTSCHRIFT

(11) **EP 2 185 309 B1**
(45) Veröffentlichungstag und Bekanntmachung des Hinweises auf die Patenterteilung: **19.01.2011**
(21) Anmeldenummer: 08785434.5
(22) Anmeldetag: 07.08.2008
(51) Int. Cl.: B23K 26/42, F16P 1/06

(54) **LASERSCHUTZWANDELELEMENT FÜR EINE UMHAUSUNG BEI LASERBEARBEITUNGSANLAGEN**
LASER-PROTECTIVE WALL ELEMENT FOR A HOUSING IN LASER MACHINING STATIONS
ÉLÉMENT DE CONVERSION DE PROTECTION LASER POUR UN CARTER DE PROTECTION DANS DES INSTALLATIONS DE TRAITEMENT AU LASER

(30) Priorität: 08.08.2007 DE 102007038780; 06.11.2007 DE 102007054285
(43) Veröffentlichungstag der Anmeldung: 19.05.2010
(73) Patentinhaber: Fraunhofer-Gesellschaft zur Förderung der angewandten Forschung, 80686 München (DE)
(72) Erfinder: HANNWEBER, Jan, 01239 Dresden (DE); KÜHN, Stefan, 09439 Amtsberg (DE); BRETSCHNEIDER, Sven, 01824 Rosenthal-Bielatal (DE); MELDE, Michael, 01277 Dresden (DE)
(74) Vertreter: Pfenning, Meinig & Partner GbR
(86) Internationale Anmeldenummer: PCT/EP2008/006528
(87) Internationale Veröffentlichungsnummer: WO 2009/019020

(56) Entgegenhaltungen:
- DE-A1- 3 246 290
- DE-A1- 3 638 874
- DE-U1- 8 908 806
- FR-A- 2 411 294

## Beschreibung

Die Erfindung betrifft ein Laserschutzwandelement gemäss dem Oberbegriff des Anspruchs 1 für eine Umhausung bei Laserbearbeitungsanlagen mit der ein erhöhter Schutz, insbesondere der Augen von Lebewesen, erreichbar ist. Das Dokument FR 2 411 294 A offenbart ein solches Laserschutzwandelement.

In der Vergangenheit wurden die Anforderungen an Schutzeinrichtungen vor Laserstrahlung bei der Laserbearbeitung erhöht, was insbesondere infolge der mit Faser- oder Scheibenlasern erreichbaren erhöhten Strahlqualitäten und Leistungsdichten, der Fall war.

Dabei unterscheidet man passive oder aktive Schutzeinrichtungen. Bei passiven Schutzeinrichtungen sind Veränderungen oder die Zerstörung von Werkstoffen zu verzeichnen, die in Folge der Energieumwandlung in Wärme auftreten. Dabei kann es in der Regel auch zum Durchdringen von hierfür eingesetzten Wandelementen kommen. Üblicherweise erfolgt dabei lediglich eine Sichtprüfung im Nachgang einer Bearbeitung mit Laserstrahlung, die in mehr oder weniger großen Zeitabständen durchgeführt werden muss, was einen entsprechend hohen Aufwand hervorruft und keine 100 %-ige Sicherheit gewährleistet werden kann.

Ausreichend sichere Schutzwände sowie notwendige Tragkonstruktionen müssen daher mit hohem und kostenintensivem Materialeinsatz hergestellt werden.

Es sind aber auch unterschiedliche aktive Schutzvorrichtungen bekannt, die auf unterschiedlichen Prinzipien beruhen. So sind optische Systeme bekannt, mit denen bestimmte Veränderungen, wie z.B. eine Gasbildung, detektiert werden können. Eine andere Möglichkeit ist die Detektion einer Veränderung eines Innendrucks bzw. einer Leckage in bzw. aus Hohlräumen, die bei einer doppelwandigen Ausführung auftreten können. Dabei liegt es auf der Hand, dass die Dichtheit, insbesondere dann, wenn in solchen Hohlräumen ein Unterdruck herrscht oder ein Fluid enthalten ist, problematisch ist.

Aus DE 36 38 874 C2 und DE 89 08 806 U1 sind Schutzvorrichtungen bekannt, bei denen zwischen Schichten elektrische Leiter ausgebildet sind durch die ein elektrischer Stromfluss erfolgt. Wird ein solcher elektrischer Leiter in Folge Aufschmelzen durchtrennt, kann kein elektrischer Strom mehr fließen, was dann zu einer Abschaltung des Lasers führen soll. Dabei ist es sehr aufwändig, die elektrischen Leiter auszubilden und dabei möglichst geringe Verluste in Kauf nehmen zu müssen. Auch wenn die elektrischen Leiter schlangenförmig ausgebildet sind, können Lücken, also Bereiche an denen kein elektrischer Leiter vorhanden ist, nicht vermieden werden, was auch bei kleinen Strahlquerschnitten von Hochleistungslasern kritisch ist, die bei einem Auftreffen nicht mit ausreichender Sicherheit eine Trennung eines solchen elektrischen Leiters hervorrufen.

Nach Durchtrennung eines elektrischen Leiters ist dies System nicht mehr betriebsbereit und die Sicherheit erst nach Austausch bzw. aufwändiger Reparatur wieder gegeben.

Zur Feststellung einer Gefährdung ist bei allen bekannten aktiven Schutzvorrichtungen eine Zerstörung der Schutzvorrichtung erforderlich.

Es ist daher Aufgabe der Erfindung den Schutz vor Laserstrahlung an solchen Arbeitsplätzen dauerhafter und mit geringerem Aufwand zu gewährleisten.

Erfindungsgemäß wird diese Aufgabe mit einem Laserschutzwandelement, das die Merkmale des Anspruchs 1 aufweist, gelöst.

Vorteilhafte Ausgestaltungen und Weiterbildungen der Erfindung können mit in untergeordneten Ansprüchen bezeichneten Merkmalen erreicht werden.

Erfindungsgemäß ist bei einem Laserschutzwandelement für eine Umhausung an Laserbearbeitungsstationen mindestens eine Zwischenschicht vorhanden. Die Zwischenschicht weist dabei Heißleitereigenschaften auf. Dies bedeutet, dass der spezifische elektrische Widerstand bei niedrigeren Temperaturen, also im Bereich üblicher Raum- bzw. Umgebungstemperaturen deutlich höher, als bei demgegenüber höheren Temperaturen ist. Für die Ausbildung und Anordnung der mindestens einen Zwischenschicht bestehen mehrere Alternativen. Die Zwischenschicht kann dabei in einer erfindungsgemäßen Ausgestaltung zwischen zwei elektrisch leitfähigen plattenförmigen Elementen angeordnet sein, so dass sie diese voneinander trennt.

In einer weiteren Ausführungsform der Erfindung kann die Zwischenschicht auf einem elektrisch leitfähigen plattenförmigen Element und auf der Zwischenschicht dann eine elektrisch leitende Beschichtung ausgebildet sein.

Es besteht bei der Erfindung aber auch die Möglichkeit die Zwischenschicht zwischen zwei elektrisch leitenden Schichten auszubilden. Ein solches Schichtsystem kann dann auf einem Trägerelement, beispielsweise einem Fensterelement aufgebracht sein.

Die plattenförmigen Elemente, beispielsweise Bleche aus Aluminium oder einem anderen Metall, die elektrisch leitfähige Beschichtung oder die elektrisch leitenden Schichten sind an eine elektrische Spannungsquelle angeschlossen. Bei normalen Bedingungen kann so kein bzw. nur ein sehr kleiner elektrischer Strom zwischen dem/den plattenförmigen Element(en), Beschichtung und/oder den Schichten über die Zwischenschicht fließen. Außerdem ist, bevorzugt in Reihe geschaltet, ein Messinstrument vorhanden, mit dem eine Messsignaländerung zur Zustandsüberwachung der Laserschutzwandelemente detektiert werden kann. Damit kann eine Änderung des elektrischen Stroms, elektrischen Widerstands und/oder der elektrischen Kapazität detektiert werden.

Trifft ein Laserstrahl auf eines der plattenförmigen Elemente, die Beschichtung, die Schichten oder auf ein Trägerelement auf, erfolgt eine zwar lokal begrenzte Erwärmung, die bis in einen Temperaturbereich von ca. 600 ° C und darüber hinaus führen kann. Der spezifische elektrische Widerstand reduziert sich in diesem Bereich der Umhausung und der elektrische Strom erhöht sich dementsprechend, was detektiert und beim Schutz vor Laserstrahlung in der Umgebung einer Laserbearbeitungsstation ausgenutzt werden kann.

So besteht die Möglichkeit den elektrischen Strom und/oder die elektrische Spannung an der Laserschutzwand permanent zu überwachen, was mittels einer hierfür geeigneten Messschaltung, die Bestandteil einer oder mit einer elektronischen Auswerte- und Steuereinheit verbunden sein kann. Wird eine Messsignaländerung, beispielsweise eine Veränderung des fließenden elektrischen Stromes und/oder der elektrischen Spannung detektiert, die einen vorgegebenen Schwellwert übersteigt, kann mindestens ein Signal generiert werden. Mit diesem Signal kann eine Abschaltung eines Lasers der innerhalb der Umhausung an einer Laserbearbeitungsstation angeordnet bzw. dort mittels Strahlführungs- und/oder Strahlformungselementen für die Laserbearbeitung genutzt wird, erfolgen.

Allein oder zusätzlich kann aber auch mindestens ein Warnsignal generiert werden, mit dem die Gefahrensituation akustisch und/oder optisch signalisiert wird.

Der Schwellwert, der hierfür berücksichtigt werden kann, kann vom jeweiligen Stoff, aus bzw. mit dem die Zwischenschicht gebildet ist, deren Dicke und den elektrischen Werten, also denen der elektrischen Spannungsquelle, an die die plattenförmigen Elemente, die Beschichtung und/oder Schichten angeschlossen sind, abhängig sein und unter Berücksichtigung dieser Parameter gewählt werden.

Eine Laserschutzwand kann mit mindestens einem Laserschutzwandelement gebildet sein, dass die zwei mit der Zwischenschicht voneinander getrennten elektrisch leitenden plattenförmigen Elemente, ein mit Beschichtung versehenes plattenförmiges Element oder ein mit Schichten versehenes Trägerelement aufweist. Es besteht aber auch die Möglichkeit, mehrere solcher Laserschutzwandelemente für eine Umhausung einzusetzen, die neben und/oder übereinander angeordnet werden können. Ein Laserschutzwandelement kann auch in Form einer Tür ausgebildet sein, die Bestandteil einer Umhausung sein kann.

Vorteilhaft ist es dabei, die Laserschutzwandelemente oder auch mehrere Laserschutzwände so zu dimensionieren und anzuordnen, dass sich äußere Ränder von neben- oder übereinander angeordneten Laserschutzwandelementen überlappen, so dass ein sicherer Schutz auch in diesen ansonsten kritischen Bereichen erreichbar ist. Auch Türen an Laserbearbeitungsstationen können ebenfalls erfindungsgemäß ausgebildet sein. Eine Zugangsmöglichkeit kann auch mit Rolltüren gewährleistet sein. Dabei können die einzelnen Lamellen von Rolltüren analog in Form einer Laserschutzwand ausgebildet werden.

Ein erfindungsgemäßes Laserschutzwandelement kann außerdem mindestens ein weiteres ebenfalls plattenförmiges Außenwandelement aufweisen, das wie die plattenförmigen Elemente parallel zueinander ausgerichtet sein kann. Ein Außenwandelement kann auch eine dreidimensional strukturierte Oberfläche aufweisen.

Ein Außenwandelement kann dabei in Bezug zu einer Laserbearbeitungsstation an der Innen- und/oder der Außenseite der Laserschutzwand angeordnet sein. Ist ein Außenwandelement aus elektrisch leitendem Werkstoff gebildet, sollte ein Abstand zu einem plattenförmigen Element oder eine elektrische Isolierung mit einer dielektrischen Trennschicht vorhanden sein. Bei einem Abstand bildet sich mindestens ein Hohlraum aus, mit dem eine verbessert thermische und akustische Dämmwirkung erreichbar ist. Eine Trennschicht kann dabei ebenfalls in Form von einer oder mehreren Platten ausgebildet sein und außerdem auch zwischen mehreren Platten Hohlräume hervorrufende Abstände vorhanden sein, so dass Platten oder auch andere geeignete Körper Abstandshalter bilden können.

Die erfindungsgemäß vorhandene Zwischenschicht sollte über die gesamte Fläche eine konstante Schichtdicke und Konsistenz aufweisen, so dass an jeder Position gleiche elektrische Eigenschaften gegeben sind. Dadurch kann gewährleistet werden, dass die bereits erwähnte Generierung mindestens eines Signals unter gleichen Bedingungen erfolgt.

Eine Heißleitereigenschaften aufweisende Zwischenschicht kann aus unterschiedlichen Werkstoffen, Stoffen und Stoffgemischen gebildet sein. Dabei ist es besonders günstig, wenn gleichzeitig mittels der Zwischenschicht die elektrisch leitenden plattenförmigen Elemente stoffschlüssig miteinander verbunden werden können. Dies ist zum Beispiel mit einer Klebverbindung, für die eine Zwischenschicht mit einem geeigneten Binder gebildet werden kann, möglich. Es besteht aber auch die Möglichkeit, Zwischenschicht und stoffschlüssige Verbindung durch eine Sinterung auszubilden. Es ist auch ein Auftrag in SolGel-Technik, durch Bedampfung, Aufspritzen, Auftragsschweißen oder ein Aufkleben einer Folie möglich.

Zwischenschichten können mit geeigneten Metalloxiden (z.B. Magnesiumoxid, Siliciumoxid, Fe₂O₄) gebildet werden. Sie können auch als Gemisch von mindestens zwei Metalloxiden vorhanden sein. Es können aber auch solche Oxidschichten auf Metallblechen, als elektrisch leitenden plattenförmigen Elementen Zwischenschichten im Sinne der Erfindung bilden. Dies können durch eine Brünierung erhaltene Schichten oder auch Eloxalschichten (z.B. auf Aluminium) sein. So kann eine Brünierung auf einem plattenförmigen Element aus Eisen oder einer Eisenlegierung und eine Eloxalschicht auf Aluminium oder einer Aluminiumlegierung eine Zwischenschicht bilden. Solche Zwischenschichten können also durch eine Werkstoffumwandlung bzw. -modifizierung gebildet werden.

Elektrisch leitende Beschichtungen oder Schichten können mit bereits genannten Verfahren ausgebildet werden. So können elektrisch leitende Schichten in bekannter Dünnschichttechnik, beispielsweise mit CVD-oder PVD-Verfahren ausgebildet werden. Wie bereits angesprochen können dünne Schichten auch auf Trägerelementen ausgebildet werden. Ein optisch transparentes Fensterelement kann dabei ein solches Trägerelement sein. Die elektrisch leitenden Schichten und die Zwischenschicht können dann mit Schichtdicken darauf ausgebildet sein, die gewährleisten, dass die optische Transparenz zumindest innerhalb des Wellenlängenbereichs des sichtbaren Lichts erhalten bleibt. Ein so ausgebildetes Laserschutzfenster kann dann ebenfalls überwacht und aufgetretene Defekte oder eine Zerstörung erkannt werden.

In einer erfindungsgemäßen Alternative kann auch ein plattenförmiges Element mit Zwischenschicht auch eine elektrisch leitende Beschichtung aufweisen. Eine solche Beschichtung kann ein elektrisch leitender Lack sein, der elektrisch leitende Partikel in einer Polymermatrix aufweist. Die Partikeldichte, deren Größe und Anzahl sollte eine ausreichende elektrische Leitfähigkeit gewährleisten. Es können dabei handelsübliche elektrisch leitende Lacke, wie z.B. einen der unter der Handelsbezeichnung AUROMAL von der AMI Doduco GmbH erhältlich ist, eingesetzt werden.

Der Auftrag eines elektrisch leitenden Lackes kann in verschiedenster Form, beispielsweise durch spincoating, Aufrakeln oder Siebdruck erfolgen.

Eine Zwischenschicht kann aber auch mit einer geeigneten Keramik, wie z.B. eine Silikatkeramik, die Heißleitereigenschaften aufweist, gebildet sein.

Es besteht aber auch die Möglichkeit für Zwischenschichten Halbleiter, insbesondere polykristalline Halbleiter mindestens eines sinterfähigen, bevorzugt zweier sinterfähiger Metalloxide oder auch Zn₂TiO₄ einzusetzen. Es können auch elektrisch leitfähige Polymere für Zwischenschichten eingesetzt werden.

Für eine Zwischenschicht können aber auch Heißleitereigenschaften aufweisende Polymere genutzt werden.

Zwischenschichten können auch mit polymeren oder anorganischen Bindern ausgebildet werden, die mit Aluminium oder Magnesiumoxid gebildet sein können, um die Heißleitereigenschaften zu erreichen.

Zwischen den beiden elektrisch leitenden plattenförmigen Elementen kann eine Zwischenschicht mit einer Stützstruktur gebildet sein, die die plattenförmigen Elemente voneinander trennt und einen Abstand der plattenförmigen Elemente vorgeben kann. Eine solche Stützstruktur kann bevorzugt in einer Zwischenschicht mit einem Heißleitereigenschaften aufweisenden Werkstoff, Stoff oder Stoffgemisch integriert sein.

Eine Stützstruktur kann mit einem mit Fasern gebildeten Gewebe oder Gewirk, z.B. einem Faserverbund, gebildet sein. Diese kann mit einem Heißleitereigenschaften aufweisenden Werkstoff, Stoff oder Stoffgemisch versetzt sein, was beispielsweise durch ein Tränken vor einem Fügen der zwei plattenförmigen Elemente erreicht werden kann.

Bei einer Temperatur von 20 ° C sollte sie einen spezifischen elektrischen Widerstand von mindestens 10¹⁰ Ωcm aufweisen, der bei einer Temperatur von 600°C auf einen Wert von mindestens 10⁸ Ωcm reduziert ist.

Dies kann beispielsweise Magnesiumoxid sein, dessen spezifischer elektrischer Widerstand bei 20°C bei 10¹⁴ Ωcm und bei 600°C bei 10⁹ Ωcm liegt.

Bei Aluminiumoxid liegt der spezifische elektrische Widerstand bei 20°C bei 10¹² Ωcm und bei 600°C bei 10⁶ Ωcm.

Für eine Tonerdeporzellan Silikatkeramik C 120 liegt der spezifische elektrische Widerstand bei 20°C bei 10¹¹ Ωcm und bei 600°C bei 10³ Ωcm.

Bei der erfindungsgemäßen Laserschutzwand kommen die Vorteile eines aktiven Schutzes zum Tragen. Trotzdem führt aber eine einmalige Deposition von Laserstrahlung auf eine Position der Umhausung zumindest nicht zum Totalausfall der Funktionalität, selbst wenn die Zwischenschicht an dieser Position zerstört oder so geschädigt worden ist, dass keine Heißleitereigenschaften dort mehr gegeben sind. Andere Flächenbereiche sind dann noch weiter funktionsfähig und die Umhausung kann weiter mit äußerst geringfügig eingeschränkter Sicherheit genutzt werden. Eine aufwändige Reparatur oder gar Austausch ist nur bei großflächiger Beeinträchtigung erforderlich.

Einige Werkstoffe, Stoffe oder Stoffgemische, die für Zwischenschichten eingesetzt werden können, bleiben aber auch bei einer hochgradigen Erwärmung resistent und behalten ihre Eigenschaften, so dass dann kein Verlust an Sicherheit zu verzeichnen ist.

Eine erfindungsgemäße Laserschutzwand kann vollständig oder auch aus mehreren solcher Elemente zusammengesetzt eine selbsttragende Struktur darstellen und so auf eine zusätzliche Tragkonstruktion verzichtet werden.

Nachfolgend soll die Erfindung beispielhaft näher erläutert werden.

Dabei zeigen:
Figur 1 ein Laserschutzwandelement für eine Laserschutzwand in schematischer Form und
Figur 2 ein Laserschutzwandelement für eine Laserschutzwand mit einer Stützstruktur.

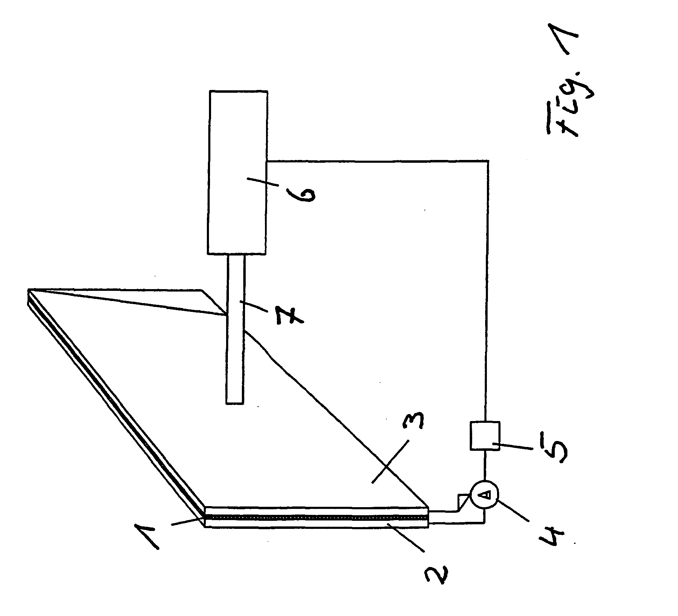

Bei dem in Figur 1 gezeigten Laserschutzwandelement, das an einem Beispiel einer Umhausung bei Laserbearbeitungsanlagen eingesetzt werden kann, sind zwei aus verzinktem Stahl gebildete Bleche, als elektrisch leitfähige plattenförmige Elemente 2 und 3, mit einem Binder, der Heißleitereigenschaften aufwies, stoffschlüssig und vollflächig durch Kleben miteinander verbunden worden. Der Binder bildet die Zwischenschicht 1. Als Binder wurde ein von der Firma POLYTEC PT GmbH, Waldbronn, DE unter der Handelsbezeichnung Resbond 906 erhältlich ist, eingesetzt. Die damit ausgebildete Zwischenschicht 1 hatte eine Dicke zwischen den beiden plattenförmigen Elementen 2 und 3 von 1 mm ± 0,5 mm. Außerdem ist in der Zwischenschicht 1 ein Glas-Gewebe, als Abstandshalter, eingebettet. Die Stahlbleche, als plattenförmige Elemente 2 und 3 haben Abmessungen 1000 mm * 1000 mm * 1 mm.

Es wurde an die beiden Stahlbleche, als plattenförmige Elemente 2 und 3, eine elektrische Spannung in Höhe von 24 V angelegt und der Fluss des elektrischen Stromes zwischen den beiden Blechen, als elektrisch leitfähige plattenförmige Elemente 2 und 3, bei unterschiedlichen Temperaturen ermittelt, um die Eignung für eine erfindungsgemäße Laserschutzwand nachweisen zu können.

Dabei konnten folgende Werte ermittelt werden:

Bei einer Temperatur von 20° C wurde eine elektrische Stromstärke I von 0,5 mA mit dem Messinstrument 4 gemessen.

Mit dem Laserstrahl 7, der von einem Laser 6 auf das innere plattenförmige Element 3 auftrifft, wurde eine lokal begrenzte Erhöhung der Temperatur auf 600 °C bewirkt. Der elektrische Strom erhöhte sich dabei auf 3 mA, was als Messsignaländerung detektiert werden kann. Eine elektronische Auswerte- und Steuereinheit 5 kann so eingestellt sein, dass eine solche Messsignaländerung, als Schwellwertüberschreitung erkannt und dann ein Signal zur Abschaltung des Lasers 6 generiert wird. Der Schwellwert kann dabei so gewählt werden, dass ein solches Signal ab Erreichen einer Temperatur von 200 ° C generiert wird.

Es kann somit nachvollzogen werden, dass die Erfindung ausreichend sicher ist und eine, wie im allgemeinen Teil der Beschreibung bereits angesprochen, Generierung von Signalen für einen Laserstrahlungsschutz, bei vorgebbaren Schwellwerten erfolgen kann und dabei Fehlauslösungen sicher vermieden werden können.

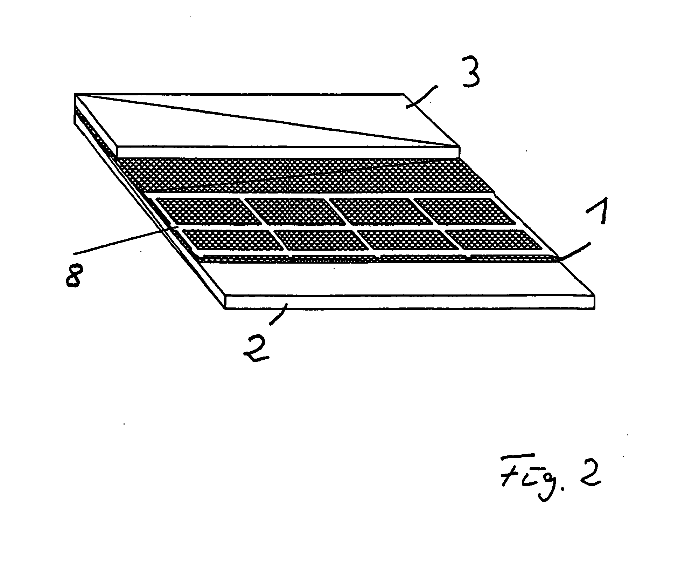

In Figur 2 ist ein für eine Laserbearbeitungsanlage einsetzbares Laserschutzwandelement mit zusätzlich integrierter Stützstruktur 8 gezeigt.

## Patentansprüche

1. Laserschutzwandelement für eine Umhausung bei Laserbearbeitungsanlagen, bei der das Laserschutzwandelement mit mindestens einer Zwischenschicht (1), die zwischen zwei elektrisch leitfähigen plattenförmigen Elementen (2, 3), diese voneinander trennend angeordnet oder an einem plattenförmigen Element ausgebildet und mit einer elektrisch leitenden Beschichtung abgedeckt oder
zwischen zwei elektrisch leitenden Schichten ausgebildet ist, gebildet ist und
die elektrisch leitfähigen plattenförmigen Elemente (2, 3), die Beschichtung und/oder die Schichten an eine elektrische Spannungsquelle sowie ein elektrischen Strom, elektrischen Widerstand und/oder elektrische Kapazität detektierendes Messinstrument (4), dessen Messsignaländerung zur Zustandsüberwachung des Laserschutzwandelements angeschlossen sind,
**dadurch gekennzeichnet, dass** die Zwischenschicht (1) elektrische Heißleitereigenschaften aufweist.

2. Laserschutzwandelement nach Anspruch 1, **dadurch gekennzeichnet, dass** mittels einer elektronischen Auswerte- und Steuereinheit (5) bei Überschreitung eines vorgebbaren Schwellwertes einer Messsignaländerung, die Generierung eines Abschaltsignals für den jeweiligen Laser (6) und/oder eines Warnsignales erfolgt.

3. Laserschutzwandelement nach Anspruch 1 oder 2, **dadurch gekennzeichnet, dass** mindestens ein drittes plattenförmiges Außenwandelement parallel zu einem der beiden plattenförmigen Elemente (2, 3) oder einem mit einer Beschichtung versehenen plattenförmigen Element angeordnet ist.

4. Laserschutzwandelement nach Anspruch 3, **dadurch gekennzeichnet, dass** ein drittes plattenförmiges Außenwandelement in einem Abstand und/oder mit einer dielektrischen Trennschicht zu und/oder von einem oder den beiden plattenförmigen Element(e) (2, 3) getrennt angeordnet ist.

5. Laserschutzwandelement nach einem der vorhergehenden Ansprüche, **dadurch gekennzeichnet, dass** die Zwischenschicht (1) über die gesamte Fläche eine konstante Schichtdicke und Konsistenz aufweist.

6. Laserschutzwandelement nach einem der vorhergehenden Ansprüche, **dadurch gekennzeichnet, dass** die Zwischenschicht (1) ein Heißleitereigenschaften aufweisender Binder ist, mit dem die plattenförmigen Elemente (2, 3) stoffschlüssig miteinander verbunden sind.

7. Laserschutzwandelement nach einem der vorhergehenden Ansprüche, **dadurch gekennzeichnet, dass** die Zwischenschicht (1) mit einem Metalloxid, Gemisch von Metalloxiden und/oder einem Heißleitereigenschaften aufweisenden Polymer oder mit einem Aluminium-
oder Magnesiumoxid enthaltenden Binder oder mit einem polykristallinen Halbleiter mindestens eines sinterfähigen Metalloxids oder mit Fe₂O₄ oder Zn₂TiO₄ gebildet ist.

8. Laserschutzwandelement nach einem der vorhergehenden Ansprüche, **dadurch gekennzeichnet, dass** die elektrisch leitenden plattenförmigen Elemente (2, 3) mit Zwischenschicht (1) und einer dielektrischen Stützstruktur (8) voneinander getrennt sind.

9. Laserschutzwandelement nach Anspruch 8, **dadurch gekennzeichnet, dass** die Stützstruktur (8) ein mit Fasern gebildetes Gewebe oder Gewirk ist, das mit dem die Zwischenschicht bildenden Stoff versetzt ist.

10. Laserschutzwandelement nach einem der vorhergehenden Ansprüche, **dadurch gekennzeichnet**, das mehrere neben und/oder übereinander angeordnete Laserschutzwandelemente mit ihren äußeren Rändern überlappend zueinander angeordnet sind.

11. Laserschutzwandelement nach einem der vorhergehenden Ansprüche, **dadurch gekennzeichnet, dass** die Zwischenschicht (1) bei einer Temperatur von 20 °C einen spezifischen elektrischen Widerstand von mindestens 10¹⁰ Ωcm aufweist, der bei einer Temperatur von 600 ° C auf einen Wert von mindestens 10⁸ Ωcm reduziert ist.

12. Laserschutzwandelement nach einem der vorhergehenden Ansprüche, **dadurch gekennzeichnet, dass** ein plattenförmiges Element (2, 3) aus Eisen oder einer Eisenlegierung mit einer Brünierung als Zwischenschicht (1) versehen ist.

13. Laserschutzwandelement nach einem der vorhergehenden Ansprüche, **dadurch gekennzeichnet, dass** ein plattenförmiges Element (2, 3) aus Aluminium oder einer Aluminiumlegierung mit einer Eloxalschicht als Zwischenschicht (1) versehen ist.

14. Laserschutzwandelement nach einem der vorhergehenden Ansprüche, **dadurch gekennzeichnet, dass** eine Beschichtung mit einem elektrisch leitenden Lack gebildet ist.

15. Laserschutzwandelement nach einem der vorhergehenden Ansprüche, **dadurch gekennzeichnet, dass** elektrisch leitende Schichten und Zwischenschicht (1) auf einem Fensterelement mit einer Dicke ausgebildet sind, so dass sie im Wellenlängenbereich des sichtbaren Lichts optisch transparent sind.

## Claims

1. A laser-protective wall element for an enclosing housing in laser machining stations, in which the laser-protective wall element is formed with at least one intermediate layer (1) which is arranged between two electrically conductive plate-shaped elements (2, 3), separating them from one another, or
is configured on a plate-shaped element and covered with an electrically conductive coating, or
is configured between two electrically conductive layers, and
the electrically conductive plate-shaped elements (2, 3), the coating and/or the layers are connected to an electric voltage source and also a measuring instrument (4) which detects electric current, electric resistance and/or electric capacitance, the change in measurement signal of which instrument for monitoring the status of the laser-protective wall element, **characterised in that** the intermediate layer (1) has electrical properties of an NTC thermistor.

2. A laser-protective wall element according to Claim 1, **characterised in that** the generation of a switch-off signal for the respective laser (6) and/or of a warning signal takes place by means of an electronic evaluation and control unit (5) upon exceeding a presettable threshold value of a change in measurement signal.

3. A laser-protective wall element according to Claim 1 or 2, **characterised in that** at least a third plate-shaped external wall element is arranged parallel to one of the two plate-shaped elements (2, 3) or a plate-shaped element provided with a coating.

4. A laser-protective wall element according to Claim 3, **characterised in that** a third plate-shaped external wall element is arranged separately at a distance and/or with a dielectric separating layer to and/or from one or both plate-shaped element(s) (2, 3).

5. A laser-protective wall element according to one of the preceding claims, **characterised in that** the intermediate layer (1) has a constant layer thickness and consistency over the entire surface.

6. A laser-protective wall element according to one of the preceding claims, **characterised in that** the intermediate layer (1) is a binder having properties of an NTC thermistor, with which the plate-shaped elements (2, 3) are connected together in a material connection.

7. A laser-protective wall element according to one of the preceding claims, **characterised in that** the intermediate layer (1) is formed with a metal oxide, mixture of metal oxides and/or a polymer having properties of an NTC thermistor or with a binder containing aluminium oxide or magnesium oxide or with a polycrystalline semiconductor of at least one sinterable metal oxide or with Fe₂O₄ or Zn₂TiO₄.

8. A laser-protective wall element according to one of the preceding claims, **characterised in that** the electrically conductive plate-shaped elements (2, 3) are separated from one another with intermediate layer (1) and a dielectric supporting structure (8).

9. A laser-protective wall element according to Claim 8, **characterised in that** the supporting structure (8) is a woven fabric or knitted fabric formed with fibres, to which fabric the substance forming the intermediate layer is added.

10. A laser-protective wall element according to one of the preceding claims, **characterised in that** a plurality of laser-protective wall elements arranged next to and/or above one another are arranged with their outer edges overlapping relative to one another.

11. A laser-protective wall element according to one of the preceding claims, **characterised in that** the intermediate layer (1) at a temperature of 20°C has a specific electrical resistance of at least 10¹⁰ Ωcm, which at a temperature of 600°C is reduced to a value of at least 10⁸ Ωcm.

12. A laser-protective wall element according to one of the preceding claims, **characterised in that** a plate-shaped element (2, 3) made of iron or an iron alloy is provided with a black finish as intermediate layer (1).

13. A laser-protective wall element according to one of the preceding claims, **characterised in that** a plate-shaped element (2, 3) made of aluminium or an aluminium alloy is provided with an anodised coating as intermediate layer (1).

14. A laser-protective wall element according to one of the preceding claims, **characterised in that** a coating with an electrically conductive paint is formed.

15. A laser-protective wall element according to one of the preceding claims, **characterised in that** electrically conductive layers and intermediate layer (1) are formed on a window element with a thickness such that they are optically transparent in the wavelength range of visible light.

## Revendications

1. Elément de paroi de protection contre les rayons laser pour une enceinte dans des installations de traitement par laser, dans lequel l'élément de paroi de protection contre les rayons laser est formé d'au moins une couche intermédiaire (1), qui est agencée entre deux éléments électroconducteurs (2, 3) en forme de plaques, de manière à pouvoir être séparés l'un de l'autre, ou
qui est formée sur un élément en forme de plaque et recouverte d'un revêtement électroconducteur, ou
qui est formée entre deux couches électroconductrices, et les éléments électroconducteurs (2, 3) en forme de plaques, le revêtement et/ou les couches sont connectés à une source de tension électrique, ainsi qu'à un instrument de mesure (4) détectant le courant électrique, la résistance électrique et/ou la capacité électrique, la variation de signal de mesure de cet instrument permettant la surveillance d'état de l'élément de paroi de protection contre les rayons laser, **caractérisé en ce que** la couche intermédiaire (1) présente des propriétés électriques de thermistance.

2. Elément de paroi de protection contre les rayons laser selon la revendication 1, **caractérisé en ce qu'**au moyen d'une unité d'exploitation et de commande électronique (5), lors du dépassement d'une valeur de seuil prédéfinie d'une variation du signal de mesure, il se produit la génération d'un signal de coupure pour le laser respectif (6) et/ou d'un signal d'avertissement.

3. Elément de paroi de protection contre les rayons laser selon la revendication 1 ou 2, **caractérisé en ce qu'**au moins un troisième élément de paroi externe en forme de plaque est agencé parallèlement à l'un des deux éléments (2, 3) en forme de plaques ou à un élément en forme de plaque pourvu d'un revêtement.

4. Elément de paroi de protection contre les rayons laser selon la revendication 3 , **caractérisé en ce qu'**un troisième élément de paroi externe en forme de plaque est agencé séparément, à une certaine distance, et/ou avec une couche de séparation diélectrique vers et/ou à partir d"un ou des deux éléments (2, 3) en forme de plaques.

5. Elément de paroi de protection contre les rayons laser selon l'une quelconque des revendications précédentes, **caractérisé en ce que** la couche intermédiaire (1) présente une épaisseur de couche et une consistance constantes sur toute sa surface.

6. Elément de paroi de protection contre les rayons laser selon l'une quelconque des revendications précédentes, **caractérisé en ce que** la couche intermédiaire (1) est un liant présentant des propriétés de thermistance, par lequel les éléments (2, 3) en forme de plaques sont liés l'un à l'autre par assemblage matériel.

7. Elément de paroi de protection contre les rayons laser selon l'une quelconque des revendications précédentes, **caractérisé en ce que** la couche intermédiaire (1) est formée d'un oxyde métallique, d'un mélange d'oxydes métalliques et/ou d'un polymère présentant des propriétés de thermistance ou
un liant contenant de l'oxyde d'aluminium ou de magnésium ou un semi-conducteur polycristallin d'au moins un oxyde métallique frittable ou de composé Fe₂O₄ ou Zn₂TiO₄ .

8. Elément de paroi de protection contre les rayons laser selon l'une quelconque des revendications précédentes, **caractérisé en ce que** les éléments électroconducteurs (2, 3) en forme de plaques sont séparés l'un de l'autre par une couche intermédiaire (1) et une structure d'appui diélectrique (8).

9. Elément de paroi de protection contre les rayons laser selon la revendication 8, **caractérisé en ce que** la structure d'appui (8) est un tissu tissé ou un tissu à mailles formé par des fibres qui est mélangé au matériau formant la couche intermédiaire.

10. Elément de paroi de protection contre les rayons laser selon l'une quelconque des revendications précédentes, **caractérisé en ce que** plusieurs éléments de paroi de protection contre les rayons laser aménagés l'un à côté de l'autre et/ou l'un au-dessus de l'autre sont agencés en se chevauchant sur leurs bords externes.

11. Elément de paroi de protection contre les rayons laser selon l'une quelconque des revendications précédentes, **caractérisé en ce que** la couche intermédiaire (1) présente une résistance électrique spécifique d'au moins 10¹⁰ Ωcm à une température de 20 °C, qui se réduit à une valeur d'au moins 10⁸ Ωcm à une température de 600 °C.

12. Elément de paroi de protection contre les rayons laser selon l'une quelconque des revendications précédentes, **caractérisé en ce qu'**un élément (2, 3) en forme de plaque en fer ou en alliage de fer est pourvu d'un brunissage comme couche intermédiaire (1).

13. Elément de paroi de protection contre les rayons laser selon l'une quelconque des revendications précédentes, **caractérisé en ce qu'**un élément (2, 3) en forme de plaque en aluminium ou en alliage d'aluminium est pourvu d'une couche d'Eloxal comme couche intermédiaire (1).

14. Elément de paroi de protection contre les rayons laser selon l'une quelconque des revendications précédentes, **caractérisé en ce qu'**un revêtement est formé par un vernis électroconducteur.

15. Elément de paroi de protection contre les rayons laser selon l'une quelconque des revendications précédentes, **caractérisé en ce que** des couches électroconductrices et une couche intermédiaire (1) sont formées sur un élément de vitre d'une épaisseur telle qu'elles soient optiquement transparentes dans la plage de longueurs d'onde de la lumière visible.
